# DEMANDE DE BREVET EUROPEEN

(11) **EP 2 611 172 A1**
(43) Date de publication de la demande: **03.07.2013**
(21) Numéro de dépôt: 11306797.9
(22) Date de dépôt: 28.12.2011
(51) Int. Cl.: H04N 13/04

(54) **Procédé de génération d'une image anaglyphe**

(71) Demandeur: Thomson Licensing, 92130 Issy-les-Moulineaux (FR)
(72) Inventeur: Sacré, Jean-Jacques, 35576 CESSON-SEVIGNE (FR); Thiébaud, Sylvain, 35576 CESSON-SEVIGNE (FR); Jolly, Emmanuel, 35576 CESSON-SEVIGNE (FR)
(74) Mandataire: Ruellan-Lemonnier, Brigitte

(57) **Abrégé**

Procédé dans lequel :
- à l'aide d'une vue droite et d'une vue gauche, on calcule une vue dite centrale,
- on filtre spectralement la vue gauche, la vue centrale et la vue droite, avec respectivement une première, une deuxième et une troisième couleur et
- on fusionne les trois vues filtrées en une seule image formant ainsi l'image anaglyphe,
- on floute la vue centrale proportionnellement à la disparité.

## Description

### Domaine Technique

L'invention concerne la génération d'un type particulier d'images anaglyphes à partir d'images stéréoscopiques classiques du type comprenant chacune une vue gauche et une vue droite d'une même scène.

### Art Antérieur

Pour générer la perception visuelle d'une scène en trois dimensions, il est connu de présenter à chaque oeil d'un spectateur une vue différente de cette scène, à savoir de présenter une vue gauche de cette scène à son oeil gauche et de présenter une vue droite de cette même scène à son oeil droit. Le point de vue de la vue droite et le point de vue de la vue gauche sont décalés horizontalement, généralement d'une distance correspondant à une distance interoculaire.

Parmi les nombreuses techniques d'affichage 3D couramment utilisées, la technique anaglyphe de représentation 3D consiste à présenter la vue gauche et la vue droite dans une même image mais dans des couleurs différentes. La vue gauche d'une première couleur et la vue droite d'une deuxième couleur sont fusionnées en une image anaglyphe. Pour percevoir en 3D une scène représentée sur un écran d'affichage par une image anaglyphe de cette scène, le spectateur porte des lunettes de filtrage de couleur, comportant un verre gauche transmettant la première couleur mais ne transmettant pas la deuxième couleur, et un verre droit transmettant la deuxième couleur mais ne transmettant pas la première couleur. Généralement, les spectres de transmission de chaque verre n'ont pas de partie commune significative.

On sait capturer, calculer ou générer une image stéréoscopique d'une scène, comprenant une vue polychromatique gauche et une vue polychromatique droite de cette scène. Chaque vue peut être par exemple capturée à l'aide d'une caméra 3D. On peut aussi calculer chaque vue à partir d'une vue classique 2D de cette scène et d'une carte de profondeur des objets de cette scène. On peut enfin générer une telle paire de vues directement par le calcul : on parle alors d'image de synthèse.

Lorsqu'on dispose d'une vue polychromatique gauche et d'une vue polychromatique droite d'une même scène, et que l'on souhaite procéder à l'affichage anaglyphe de cette scène, se pose alors la question de la transformation de cette paire de vues polychromatiques en une image anaglyphe de la scène. Cette transformation correspond généralement à un filtrage de couleur de chaque vue puis à la fusion de chaque vue filtrée en une image anaglyphe. L'opération de filtrage de couleur est généralement effectuée par le calcul. Elle consiste par exemple à ne retenir qu'une composante couleur de la vue polychromatique.

Chaque vue polychromatique d'une scène est généralement composée de trois vues : une vue monochromatique rouge, une vue monochromatique verte et une vue monochromatique bleue. Dans le cas d'un affichage anaglyphe vert-magenta, le filtrage de la vue gauche consistera généralement dans la suppression de ses composantes rouge et bleue, et le filtrage de la vue droite consistera généralement dans la suppression de sa composante verte.

L'article publié en janvier 2009 par Robin Lobel, intitulé "Magenta-cyan Anaglyphs", démontre l'avantage à utiliser des anaglyphes magenta-cyan par rapport à des anaglyphes plus conventionnels, comme le rouge-cyan, le vert-magenta, ou le bleu-jaune.

Dans les images anaglyphes de type magenta-cyan, la première couleur (magenta) de la vue présentée à l'oeil gauche et la deuxième couleur (cyan) de la vue présentée à l'oeil droit ont une zone spectrale commune, correspondant ici à une couleur bleue.

Pour transformer d'une manière classique une paire de vues polychromatiques d'une scène, gauche et droite, en une image anaglyphe de type magenta-cyan de cette scène :
- on filtre la vue polychromatique gauche à l'aide d'un premier filtre ne transmettant que la couleur magenta,
- on filtre la vue polychromatique droite à l'aide d'un deuxième filtre ne transmettant que la couleur cyan, et
- on fusionne les deux images filtrées en une image anaglyphe.

Un inconvénient à générer de cette façon classique des images anaglyphes est que, lors de leur affichage, chaque oeil d'un spectateur reçoit la composante bleue à la fois de la vue gauche et de la vue droite, ce qui peut provoquer une impression désagréable de perception puisque ces deux vues sont décalées horizontalement.

### Résumé de l'invention

Un but de l'invention est de limiter l'inconvénient précité.

A cet effet, l'invention a pour objet un procédé de transformation d'une image stéréoscopique d'une scène comprenant une vue polychromatique gauche et une vue polychromatique droite de cette scène, représentant la dite scène vue respectivement d'un point de vue gauche et d'un point de vue droit, en une image anaglyphe pour visualisation à l'aide d'un paire de lunettes anaglyphes comprenant un verre gauche transmettant une première et une deuxième zone spectrale sans transmettre significativement une troisième zone spectrale, et un verre droit transmettant la deuxième et la troisième zone spectrale sans transmettre significativement la première zone spectrale, comprenant les étapes dans lesquelles :
- à l'aide de la vue polychromatique droite et de la vue polychromatique gauche, on calcule une vue dite centrale de la dite scène, représentant la dite scène vue d'un point de vue dit central placé au centre de la droite liant le point de vue droit et le point de vue gauche,
- on filtre spectralement la vue polychromatique gauche en éliminant de cette vue la composante couleur correspondant à la deuxième et à la troisième zones spectrales,
- on filtre spectralement la vue polychromatique centrale en éliminant de cette vue la composante couleur correspondant à la première et à la troisième zones spectrales,
- on filtre spectralement la vue polychromatique droite en éliminant de cette vue la composante couleur correspondant à la première et à la deuxième zones spectrales, et
- on fusionne la vue gauche ainsi filtrée, la vue centrale ainsi filtrée et la vue droite ainsi filtrée en une seule image formant ladite image anaglyphe. En résumé, dans le procédé selon l'invention :
- à l'aide d'une vue droite et d'une vue gauche, on calcule une vue dite centrale,
- on filtre spectralement la vue gauche, la vue centrale et la vue droite, et
- on fusionne les trois vues filtrées en une seule image formant ainsi l'image anaglyphe.

Grâce au procédé selon l'invention, lors de l'affichage des images anaglyphes générées selon ce procédé, chaque oeil d'un spectateur reçoit la composante couleur correspondant à la deuxième zone spectrale d'une seule et même vue, à savoir la vue centrale. On évite ainsi toute impression désagréable de perception.

De préférence, le procédé comprend également des étapes dans lesquelles :
- à l'aide de la vue polychromatique droite et de la vue polychromatique gauche, on évalue une valeur de disparité pour chaque pixel de l'image,
- avant ou après filtrage spectral de la dite vue centrale, on floute chaque pixel de la dite vue centrale avec une amplitude de floutage proportionnelle à la valeur absolue de disparité évaluée pour ce pixel,
la vue centrale filtrée et ainsi floutée remplaçant la vue centrale filtrée pour ladite étape de fusion.

L'image anaglyphe qu'on obtient alors présente avantageusement une profondeur de champ plus faible pour la composante couleur correspondant à la deuxième zone spectrale en comparaison de la profondeur de champ pour la composante couleur correspondant à la première et/ou la troisième zone spectrale, ce qui génère avantageusement un effet 3D dans la composante couleur correspondant à la deuxième zone spectrale. Le floutage est un moyen connu pour générer un effet 3D de type monoculaire, au même titre que la perspective ou l'ombrage.

On règle avantageusement l'amplitude du floutage également en fonction de l'amplitude de l'effet 3D que l'on souhaite obtenir dans la composante couleur correspondant à la deuxième zone spectrale.

De préférence on floute chaque pixel à l'aide d'un algorithme Gaussien de floutage.

De préférence, la première zone spectrale correspond à une couleur rouge, la deuxième zone spectrale correspond à une couleur bleue, et la troisième zone spectrale correspond à une couleur verte.

De préférence, la première zone spectrale correspond aux longueurs d'onde supérieures à 580 nm, la deuxième zone spectrale correspond aux longueurs d'onde inférieures à 480 nm, et la troisième zone spectrale correspond aux longueurs d'onde comprises entre 480 nm et 580 nm.

L'image anaglyphe ainsi générée par transformation est alors avantageusement de type magenta-cyan. Comme la rétine de l'oeil humain présente une résolution spatiale plus faible dans la couleur bleue, c'est-à-dire dans la zone spectrale correspondant aux longueurs d'onde inférieures à 480 nm, le floutage de la composante bleue des images n'est pas gênante.

L'invention a également pour objet un procédé d'affichage d'une image stéréoscopique d'une scène comprenant un vue polychromatique gauche et une vue polychromatique droite de cette scène, qui comprend les étapes dans lesquelles on transforme ladite image stéréoscopique en une image anaglyphe à l'aide du procédé précédemment décrit et on affiche sur un écran l'image anaglyphe ainsi obtenue pour visualisation à l'aide d'un paire de lunettes anaglyphes comprenant un verre gauche transmettant la première et la deuxième zone du spectre visible sans transmettre significativement la troisième zone du spectre visible, et un verre droit transmettant la deuxième et la troisième zone du spectre visible sans transmettre significativement la première zone du spectre visible.

### Brève description des dessins

L'invention sera mieux comprise à la lecture de la description qui va suivre, donnée à titre d'exemple non limitatif, et en référence aux figures annexées sur lesquelles :
- la figure 1 représente un diagramme des étapes d'un mode de réalisation du procédé selon l'invention ;
- la figure 2 donne un exemple de caractéristiques spectrales des couleurs primaires rouge, vert et bleue d'un dispositif d'affichage de type LCD qui peut être utilisé pour afficher l'image anaglyphe de type magenta-cyan générée par le procédé selon le mode de réalisation de la figure 1 ;
- la figure 3 illustre les caractéristiques spectrales de transmission du verre gauche (« filtre magenta ») et du verre droit (« filtre cyan ») d'un paire de lunettes anaglyphe qu'il convient qu'un spectateur porte pour visualiser en 3D l'image anaglyphe de type magenta-cyan générée par le procédé selon le mode de réalisation de la figure 1.

### Description des modes de réalisation

On va maintenant décrire le procédé de transformation d'images stéréoscopiques en images anaglyphes de type magenta-cyan. L'invention s'étend à d'autres types d'anaglyphes, notamment magenta-jaune.

A partir d'une vue polychromatique gauche et d'une vue polychromatique droite d'une même scène, on cherche à obtenir une image anaglyphe de type magenta-cyan de cette scène qui soit visualisable à l'aide d'un paire de lunettes anaglyphes de type « magenta-cyan » comprenant un verre gauche transmettant une lumière de couleur magenta sans transmettre significativement de lumière dans la couleur verte, et un verre droit transmettant une lumière de couleur cyan sans transmettre significativement de lumière dans la couleur rouge.

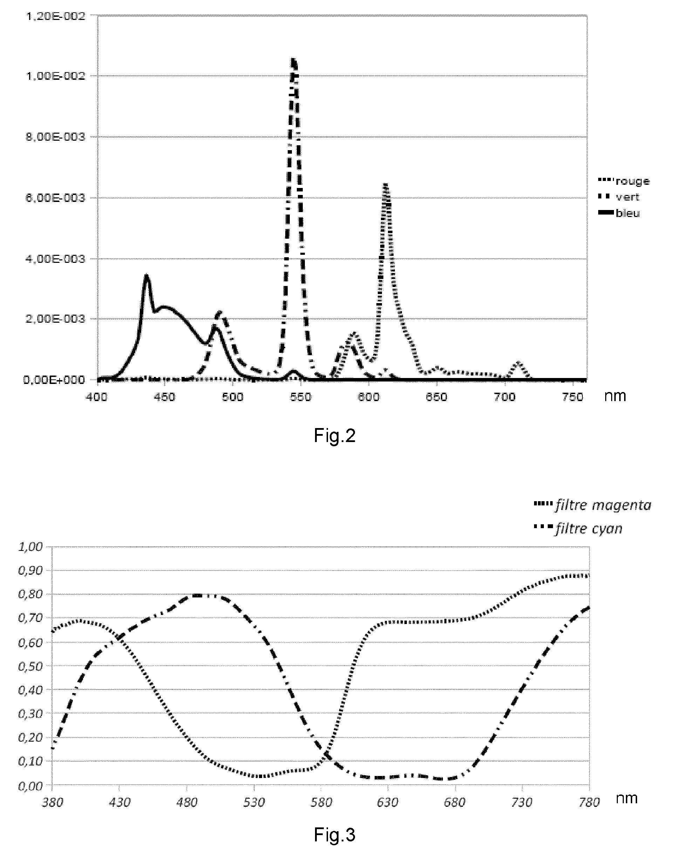

La figure 3 représente un exemple de caractéristiques de transmission spectrale du verre gauche (« filtre magenta ») et du verre droit (« filtre cyan ») d'une telle paire de lunettes anaglyphes. Le verre gauche transmet une première zone de longueurs d'onde du spectre visible supérieures à 580 nm et une deuxième zone de longueurs d'onde du spectre visible inférieures à 480 nm sans transmettre significativement une troisième zone de longueurs d'onde du spectre visible comprises entre 480 nm et 580 nm. Le verre droit transmet la deuxième zone de longueurs d'onde du spectre visible inférieures à 480 nm et la troisième zone de longueurs d'onde du spectre visible comprises entre 480 nm et 580 nm sans transmettre significativement la première zone de longueurs d'onde du spectre visible supérieures à 580 nm.

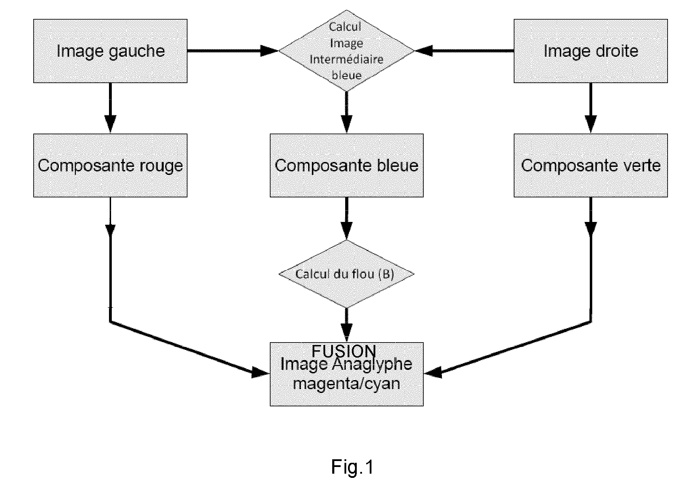

Pour mettre en oeuvre le procédé selon l'invention, on procède alors de la manière suivante, en se référant à la figure 1.

De la vue ou image gauche et de la vue ou image droite de la scène de laquelle on part, on peut déduire d'une manière connue en elle-même le point de vue dit « gauche » de l'image gauche et le point de vue dit « droit » de l'image droite. On déduit un point de vue dit « central » placé au centre de la droite liant le point de vue droit et le point de vue gauche.

Dans une première étape, toujours à partir de la vue ou image gauche et de la vue ou image droite de la scène, on calcule une image centrale ou intermédiaire de cette scène, prise du point de vue central. N'importe quelle méthode connue de calcul ou d'interpolation d'images de points de vue intermédiaires peut être utilisée à cet effet, comme la méthode publiée par Changming Jin et Hong Jeong les 11-13 novembre 2008 dans «Third International Conference on Convergence and Hybrid Information Technology, 2008 (ICCIT '08) n », dans un article intitulé « Intermediate View Synthesis for Multi-view 3D Displays Using Belief Propagation-Based Stereo Matching ». De préférence, on n'effectue le calcul de l'image centrale que pour la composante de couleur bleue, correspondant à la deuxième zone de longueurs d'onde du spectre visible.

A noter que, lors de la mise en oeuvre de cette première étape, on est généralement amené à évaluer la disparité de chaque pixel de l'image. A partir de la vue ou image gauche et de la vue ou image droite de la scène, on obtient alors une carte de disparités des points d'objet de cette scène. La disparité d'un pixel correspond au décalage horizontal entre la position horizontale d'un pixel dans la vue gauche et la position horizontale du pixel correspondant dans la vue droite. Il existe de très nombreuses méthodes pour établir des cartes de disparités, qui ne seront pas décrites ici.

Dans une deuxième étape, on sélectionne : 1/ la composante rouge de la vue ou image gauche - 2/ la composante bleue de la vue ou image centrale - 3/ la composante verte de la vue ou image droite.

A noter qu'un telle sélection revient à :
1/ filtrer spectralement la vue ou image gauche en éliminant de cette vue la composante couleur correspondant à la deuxième et à la troisième zones précédemment définies, ce qui donne la composante rouge ci-dessus ;
2/ filtrer spectralement la vue ou image centrale en éliminant de cette vue la composante couleur correspondant à la première et à la troisième zones précédemment définies, ce qui donne la composante bleue ci-dessus ;
3/ filtrer spectralement la vue ou image droite en éliminant de cette vue la composante couleur correspondant à la première et à la deuxième zones précédemment définies, ce qui donne la composante verte ci-dessus.

Des méthodes de filtrages spectrales autres que la sélection décrite ci-dessus peuvent être utilisées sans se départir de l'invention. A noter que le filtrage de la vue ou image centrale n'est pas nécessaire dans le cas où le calcul de l'image centrale n'est effectué que pour la composante de couleur bleue.

Dans une troisième étape optionnelle, on floute chaque pixel de la vue ou image centrale avec une amplitude de floutage proportionnelle à la valeur absolue de disparité évaluée pour ce pixel. Ces valeurs de disparité sont évaluées à partir de la carte de disparité précédemment établie pour le calcul de la vue centrale. Le floutage est effectué à l'aide d'un algorithme classique de floutage présentant un coefficient qui permet de régler l'amplitude de floutage. De préférence, on utilise un algorithme Gaussien de floutage. Cette troisième étape optionnelle peut être effectuée avant ou après le filtrage de la vue centrale.

Dans la quatrième et dernière étape du procédé, la composante rouge de la vue ou image gauche, la composante bleue de la vue ou image centrale qui est, le cas échéant, floutée, et la composante verte de la vue ou image droite sont fusionnées en une seule image qui forme alors une image anaglyphe magenta-cyan selon l'invention.

Pour mettre en oeuvre les différentes étapes précitées, on utilise de moyens classiques de traitement d'images, c'est-à-dire notamment des processeurs d'images programmables et des mémoires d'images. On utilise avantageusement un ordinateur. Ces éléments classiques ne seront pas décrits ici en détail.

A l'aide d'un dispositif d'affichage classique, comme un LCD (« Liquid Crystal Display » en Anglais), un PDP (« Plasma Display Panel » en Anglais), ou un projecteur, on affiche l'image anaglyphe magenta-cyan ainsi obtenue. La figure 2 donne un exemple de caractéristiques spectrales des couleurs primaires rouge, vert et bleue d'un dispositif d'affichage de type LCD qui peut être utilisé pour afficher l'image anaglyphe de type magenta-cyan générée par le procédé qui vient d'être décrit.

Lorsqu'un spectateur portant la paire de lunettes anaglyphes magenta-cyan précédemment définie observe l'écran d'affichage de ce dispositif, son oeil gauche perçoit, en couleur magenta, la vue gauche de la scène représentée par l'image anaglyphe, et, en couleur cyan, la vue droite de la même scène. Le spectateur perçoit alors cette scène en 3D. Chaque oeil reçoit avantageusement la même image dans la composante couleur commune aux deux yeux, c'est-à-dire dans la composante couleur correspondant à la deuxième zone de longueurs d'onde du spectre visible, à savoir ici la composante bleue. On évite ainsi toute impression désagréable de perception.

Si la troisième étape du procédé est mise en oeuvre, la profondeur de champ de la composante bleue de l'image anaglyphe est plus faible que celle de la composante rouge ou de la composante verte, ce qui génère avantageusement un effet 3D dans la composante bleue (ici, un effet 3D de type monoculaire). On règle avantageusement l'amplitude du floutage de cette troisième étape non seulement en fonction de la valeur absolue de disparité comme précédemment décrit, mais également en fonction de l'amplitude de l'effet 3D que l'on souhaite obtenir dans la composante bleue.

La présente invention a été décrite en se référant à un anaglyphe de type magenta-cyan ; il est évident pour l'homme du l'art qu'elle peut s'appliquer à d'autres types d'anaglyphes, du moment qu'ils ont une composante spectrale commune.

## Revendications

1. Procédé de transformation d'une image stéréoscopique d'une scène comprenant une vue polychromatique gauche et une vue polychromatique droite de cette scène, représentant la dite scène vue respectivement d'un point de vue gauche et d'un point de vue droit, en une image anaglyphe pour visualisation à l'aide d'un paire de lunettes anaglyphes comprenant un verre gauche transmettant une première et une deuxième zone spectrale sans transmettre significativement une troisième zone spectrale, et un verre droit transmettant la deuxième et la troisième zone spectrale sans transmettre significativement la première zone spectrale, comprenant les étapes dans lesquelles :
- à l'aide de la vue polychromatique droite et de la vue polychromatique gauche, on calcule une vue dite centrale de la dite scène, représentant la dite scène vue d'un point de vue dit central placé au centre de la droite liant le point de vue droit et le point de vue gauche,
- on filtre spectralement la vue polychromatique gauche en éliminant de cette vue la composante couleur correspondant à la deuxième et à la troisième zones spectrales,
- on filtre spectralement la vue polychromatique centrale en éliminant de cette vue la composante couleur correspondant à la première et à la troisième zones spectrales,
- on filtre spectralement la vue polychromatique droite en éliminant de cette vue la composante couleur correspondant à la première et à la deuxième zones spectrales, et
- on fusionne la vue gauche ainsi filtrée, la vue centrale ainsi filtrée et la vue droite ainsi filtrée en une seule image formant ladite image anaglyphe.

2. Procédé de transformation selon la revendication 1 **caractérisé en ce qu'**il comprend également des étapes dans lesquelles :
- à l'aide de la vue polychromatique droite et de la vue polychromatique gauche, on évalue une valeur de disparité pour chaque pixel de l'image,
- avant ou après filtrage spectral de la dite vue centrale, on floute chaque pixel de la dite vue centrale avec une amplitude de floutage proportionnelle à la valeur absolue de disparité évaluée pour ce pixel,
la vue centrale filtrée et ainsi floutée remplaçant la vue centrale filtrée pour ladite étape de fusion.

3. Procédé de transformation selon la revendication 2 **caractérisé en ce qu'**on floute chaque pixel à l'aide d'un algorithme Gaussien de floutage.

4. Procédé de transformation selon l'une quelconque des revendications 1 à 3 **caractérisé en ce que** la première zone spectrale correspond à une couleur rouge, **en ce que** la deuxième zone spectrale correspond à une couleur bleue, et **en ce que** la troisième zone spectrale correspond à une couleur verte.

5. Procédé de transformation selon l'une quelconque des revendications 1 à 3 **caractérisé en ce que** la première zone spectrale correspond aux longueurs d'onde supérieures à 580 nm, **en ce que** la deuxième zone spectrale correspond aux longueurs d'onde inférieures à 480 nm, et **en ce que** la troisième zone spectrale correspond aux longueurs d'onde comprises entre 480 nm et 580 nm.

6. Procédé d'affichage d'une image stéréoscopique d'une scène comprenant un vue polychromatique gauche et une vue polychromatique droite de cette scène, **caractérisé en ce qu'**il comprend les étapes dans lesquelles on transforme ladite image stéréoscopique en une image anaglyphe à l'aide du procédé selon l'une quelconque des revendications précédentes et on affiche sur un écran l'image anaglyphe ainsi obtenue pour visualisation à l'aide d'un paire de lunettes anaglyphes comprenant un verre gauche transmettant la première et la deuxième zone du spectre visible sans transmettre significativement la troisième zone du spectre visible, et un verre droit transmettant la deuxième et la troisième zone du spectre visible sans transmettre significativement la première zone du spectre visible.
